# EUROPEAN PATENT APPLICATION

(11) **EP 4 418 358 A1**
(43) Date of publication of application: **21.08.2024**
(21) Application number: 23863451.3
(22) Date of filing: 05.09.2023
(51) Int. Cl.: H01M 4/36, H01M 4/525, H01M 4/505, H01M 4/48, H01M 4/587, H01M 10/0525, H01M 4/02

(54) **SECONDARY BATTERY**

(30) Priority: 05.09.2022 KR 20220112181
(71) Applicant: LG Energy Solution, Ltd., Seoul 07335 (KR)
(72) Inventor: KIM, Shulkee, Daejeon 34122 (KR); KIM, Minsoo, Daejeon 34122 (KR); BAEK, Sora, Daejeon 34122 (KR); OH, Sang Seung, Daejeon 34122 (KR); YOO, Kwang Ho, Daejeon 34122 (KR)
(74) Representative: Plasseraud IP
(86) International application number: PCT/KR2023/013209
(87) International publication number: WO 2024/053979

(57) **Abstract**

The present specification provides a secondary battery comprising a positive electrode, a negative electrode, a separator, and an electrolyte, wherein the negative electrode includes a negative electrode active material, the negative electrode active material includes a Si-based active material and a carbon-based active material, the positive electrode includes a Ni-based active material, and the Ni-based active material has a cobalt oxide layer on a portion of the surface of particles.

## Description

### [Technical Field]

The present application claims priority to and the benefit of Korean Patent Application No. 10-2022-0112181 filed in the Korean Intellectual Property Office on September 5, 2022, the entire contents of which are incorporated herein by reference.

The present invention relates to a secondary battery.

### [Background Art]

Due to characteristics of being easily applicable to various products and electrical characteristics such as high energy density, a secondary battery is universally applied not only to a portable device but also to an electric vehicle (EV) or a hybrid electric vehicle (HEV) that is driven by an electrical driving source.

The secondary battery is attracting attention as a new energy source to improve eco-friendliness and energy efficiency because of the primary advantage that the use of fossil fuels can be dramatically reduced and the secondary advantage that no by-products are generated from the use of energy.

In general, a secondary battery includes a positive electrode, a negative electrode, a separator interposed between the positive electrode and the negative electrode, an electrolyte, and the like. In addition, the positive electrode and the negative electrode may be formed on current collectors with active material layers each including a positive electrode active material and a negative electrode active material. In general, for the positive electrode, a lithium-containing metal oxide such as LiCoO₂ and LiMn₂O₄ is used as the positive electrode active material, and for the negative electrode, a carbon-based compound, a silicon-based compound, a mixture thereof, or the like is used as the negative electrode active material.

Recently, in order to develop a battery allowing for rapid charging, a mixture of a carbon-based compound such as graphite and a silicon-based compound is used for a negative electrode. However, when the silicon-based compound is included, a resistance of the negative electrode increases rapidly at the end of discharge, resulting in an increase in difference between the resistance of the negative electrode and the resistance of the positive electrode, which shortens the life of the battery and deteriorates room temperature cycle characteristics. Therefore, there is a need to develop batteries to solve these problems.

### Citation List

### Patent Literature

(Patent Literature 1) Korean Patent Application Publication No. 10-2012-0037409

### [Detailed Description of the Invention]

### [Technical Problem]

The present invention attempts to provide a secondary battery with improved battery life and room temperature cycle characteristics by reducing a difference between a resistance of a negative electrode and a resistance of a positive electrode at the end of discharge while including a silicon-based compound in the negative electrode.

However, the technical problem to be solved by the present invention is not limited to the above-described problem, and other problems not described will be apparently understood by one skilled in the art from the following description.

### [Technical Solution]

An exemplary embodiment of the present invention provides a secondary battery including a positive electrode, a negative electrode, a separator, and an electrolyte, wherein the negative electrode includes a negative electrode active material, wherein the negative electrode active material includes a Si-based active material and a carbon-based active material, wherein the positive electrode includes a Ni-based active material, and wherein the Ni-based active material has a cobalt oxide layer provided on a portion of a surface of a particle.

In addition, an exemplary embodiment of the present invention provides a secondary battery including a positive electrode, a negative electrode, a separator, and an electrolyte, wherein a ratio of an electrode density of the positive electrode to an electrode density of the negative electrode (electrode density of the positive electrode/electrode density of the negative electrode) is 2.06 or greater.

### [Advantageous Effects]

The secondary battery of the present invention includes the positive electrode in which the Ni-based active material having a cobalt oxide layer on a portion of a surface of a particle is included, thereby making it possible to reduce the rapid decrease in resistance of the positive electrode at the end of discharge. Accordingly, it is possible to obtain a secondary battery that allows for a reduction in the difference between the resistance of the negative electrode and the resistance of the positive electrode and has improved lifespan and room temperature cycle characteristics.

Specifically, if a cobalt oxide layer is provided on the entire surface of the particle of the Ni-based active material in order to improve the resistance of the positive electrode, the resistance at the end of discharge is significantly lowered. As a result, the use of the Si-based active material included in the negative electrode in order to allow for rapid charging increases excessively (the depth of use increases), resulting in a decrease in life performance of the battery. The secondary battery of the present invention has the cobalt oxide layer on a portion of the surface of the particle of the Ni-based active material. As a result, it is possible to obtain the secondary battery that allows for rapid charging, improves the resistance of the positive electrode, and reduces the difference in resistance between the positive electrode and the negative electrode and the depth of use of the Si-based active material to improve room temperature life.

### [Brief Description of Drawings]

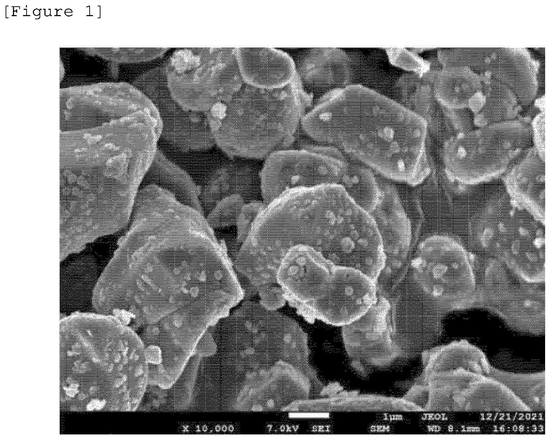

FIG. 1 shows a SEM image of a Ni-based active material with a cobalt oxide layer on a portion of a surface of a particle.

### [Best Mode]

Hereinafter, the present invention will be described in detail. The following description is intended to aid understanding of the present invention, and does not determine or limit the scope of the invention.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, the crystallinity of the structure included in the positive electrode or negative electrode active material can be confirmed through X-ray diffraction analysis, and the X-ray diffraction analysis may be performed by using an X-ray diffraction (XRD) analyzer (product name: D4-endavor, manufacturer: Bruker), or by appropriately adopting devices that are used in the art, in addition to the above device.

In the present specification, the presence or absence of elements and the contents of elements in the positive electrode or negative electrode active material can be confirmed through ICP analysis, and the ICP analysis may be performed by using an inductively coupled plasma atomic emission spectrometer (ICPAES, Perkin-Elmer 7300).

The present invention is a secondary battery including a positive electrode, a negative electrode, a separator, and an electrolyte, wherein the negative electrode includes a negative electrode active material, wherein the negative electrode active material includes a Si-based active material and a carbon-based active material, wherein the positive electrode includes a Ni-based active material, and wherein the Ni-based active material has a cobalt oxide layer provided on a portion of a surface of a particle.

In the present specification, when the negative electrode active material includes a Si-based active material, the resistance of the negative electrode rapidly increases at the end of discharge, and the resistance of the positive electrode using a positive electrode material with low resistance characteristics decreases rapidly, so that a difference between the resistance of the negative electrode and the resistance of the positive electrode greatly increases. Accordingly, there is a problem that the deterioration of the negative electrode progresses rapidly, shortening the life of the battery and deteriorating room temperature cycle characteristics. To solve this problem, when a cobalt oxide layer is provided on a portion of a surface of the particle of the Ni-based active material, which is a positive electrode material, the rapid decrease in resistance of the positive electrode is reduced, making it possible to obtain a battery with improved life and room temperature cycle characteristics.

In the present specification, the end of discharge refers to a region where the SOC (states of charge) of a full cell is 10% or less.

### <Ni-Based Active Material>

The positive electrode of the present invention includes a Ni-based active material, and the Ni-based active material has a cobalt oxide layer provided on a portion of a surface of a particle. In the description "portion of the surface of the particle", "portion" means not the entire surface of the particle of the Ni-based active material. Specifically, the provision of a cobalt oxide layer on a portion of the surface of the particle of the Ni-based active material means excluding a case where the cobalt oxide layer is formed on the entire surface of the particle of the Ni-based active material.

In the present invention, "cobalt oxide layer" is a layer including cobalt oxide. The cobalt oxide layer may be composed only of cobalt oxide, or may include cobalt oxide as a main component and further include a trace amount of an additional component. For example, the cobalt oxide layer may include 90 wt% or more and 100 wt% or less of cobalt oxide.

According to an exemplary embodiment of the present invention, the cobalt oxide layer may be formed on 1% to 99%, 5% to 99%, or 10% to 80% of a surface area of the particle of the Ni-based active material.

In an exemplary embodiment of the present invention, a shape of the cobalt oxide layer is not limited as long as it is formed on a portion of the surface of the particle of the Ni-based active material, and may be of an island type. The island type refers to a shape in which all circumferences are not continuously connected. This is an expression for distinguishing the same from one in which the whole or part of the surface of the particle of the Ni-based active material is continuously surrounded, and this term itself does not limit a shape, a size, or an area. As can be seen in FIG. 1, the cobalt oxide layer refers to an island type particle formed on the surface of the particle of the Ni-based active material, and a shape thereof is not limited.

In an exemplary embodiment of the present invention, the Ni-based active material includes 2 or more, 5 or more, 10 or more, or 20 or more cobalt oxide layers on the surface of the particle, and the cobalt oxide layer is of an island type. The island type includes all shapes, for example, a lumped shape such as a sphere and a distorted sphere formed on the surface of the particle of the Ni-based active material, a shape in which a lump and a lump are combined, and the like, and the shape is not limited.

The cobalt oxide layers may be arranged spaced apart on the surface of the particle of the Ni-based active material or may be discontinuously distributed on a portion of the surface of the particle of the Ni-based active material.

According to an exemplary embodiment of the present invention, a thickness of the cobalt oxide layer is 5 nm to 10 nm. Here, 'thickness' refers to a length of the longest straight line among straight lines crossing the cobalt oxide layer.

In an exemplary embodiment of the present invention, the shapes and thicknesses of the respective cobalt oxide layers formed on the surface of the particle of the Ni-based active material are the same as or different from each other.

According to an exemplary embodiment of the present application, the cobalt oxide layer is included in an amount of 0.5 part by weight to 3 parts by weight on the basis of 100 parts by weight of the Ni-based active material.

The Ni-based active material of the present invention may include a lithium composite metal oxide including lithium and one or more metals such as cobalt, manganese, nickel, or aluminum. More specifically, a lithium-nickel-manganese-cobalt-based oxide (e.g., Li(NiₚCo_{q}Mnᵣ₁)O₂ (here, 0<p<1, 0<q<1, 0<r1<1, p+q+r1=1) or Li(Niₚ₁Co_{q1}Mnᵣ₂)O₄ (here, 0<p1<2, 0<q1<2, 0<r2<2, p1+q1+r2=2), etc.), a lithium-nickel-cobalt-transition metal (M) oxide (e.g., Li(Ni)ₚ₂Co_{q2}Mnᵣ₃M_{S2})O₂ (here, M is selected from the group consisting of Al, Fe, V, Cr, Ti, Ta, Mg and Mo, and p2, q2, r3 and s2 are each independent atomic fraction of elements, 0<p2<1, 0 < q2 < 1, ≤r3 < 1, 0 < s2 < 1, p2+q2+r3+s2=1), etc.), and the like may be exemplified, and any one or two or more of these compounds may be included. However, the present invention is not limited thereto.

### <Negative Electrode>

A negative electrode according to an exemplary embodiment of the present invention includes a negative electrode active material, and the negative electrode active material includes a Si-based active material and a carbon-based active material.

Specifically, the negative electrode may include a negative electrode current collector and a negative electrode active material layer arranged on at least one surface of the negative electrode current collector. The negative electrode active material layer includes the Si-based active material and the carbon-based active material. Furthermore, the negative electrode active material layer may further include a binder and/or a conductive material.

According to an exemplary embodiment of the present invention, the carbon-based active material may be artificial graphite, natural graphite, carbon black or the like.

In the related art, it is general to use only graphite-based compounds as the negative electrode active material. However, in recent years, as the demand for high-capacity batteries is increasing, attempts to mix and use silicon-based active materials are increasing in order to increase capacity.

While the room temperature cycle life problem does not occur when only a carbon-based compound is included as the negative electrode active material, the room temperature cycle life problem occurs when a silicon-based active material is included. Therefore, in order to solve this problem, the present inventors conceived the present invention.

In an exemplary embodiment of the present invention, the Si-based active material may be SiOp (0<β<2) or a Si-C composite.

In addition, in an exemplary embodiment of the present invention, the Si-based active material is included in an amount of 1 part by weight to 10 parts by weight, preferably 5 parts by weight to 10 parts by weight on the basis of 100 parts by weight of the negative electrode active material. When the content of the Si-based active material satisfies the above range, an improved effect in terms of energy density and cell resistance is obtained, and an excellent effect in terms of life is obtained because the volume expansion that occurs during charging/discharging is small.

The negative electrode active material layer may be formed by applying a negative electrode slurry including a negative electrode active material, a binder, and/or a conductive material to at least one surface of a negative electrode current collector, and drying and roll-pressing the same.

The negative electrode slurry includes the negative electrode active material, the binder, and/or the conductive material.

According to an exemplary embodiment of the present specification, the negative electrode slurry may further include an additional negative electrode active material, in addition to the Si-based active material and the carbon-based active material described above.

As the additional negative electrode active material, a compound capable of reversible intercalation and deintercalation of lithium may be used. Specific examples may include a metallic compound capable of being alloyed with lithium, such as Si, Al, Sn, Pb, Zn, Bi, In, Mg, Ga, Cd, Si alloys, Sn alloys, or Al alloys; a metal oxide capable of doping and undoping lithium, such as SiOp(0<P<2), SnO₂, vanadium oxide, lithium titanium oxide, and lithium vanadium oxide, or a composite including the metallic compound and a carbonaceous material, such as a Si-C composite or a SnC composite, and any one thereof or a mixture of two or more thereof may be used. In addition, a metal lithium thin film may be used as the negative electrode active material.

In an exemplary embodiment of the present invention, a weight ratio of the negative electrode active material and the additional negative electrode active material included in the negative electrode slurry may be 10:90 to 90:10, and specifically 10:90 to 50:50.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface treated with carbon, nickel, titanium, silver, or the like, or the like may be used. Specifically, transition metals that adsorb carbon well, such as copper and nickel, may be used for the current collector. A thickness of the current collector may be 6 µm to 20 um. However, the thickness of the current collector is not limited thereto.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon powder; metal powder such as aluminum and nickel powder; a conductive whisker such as zinc oxide and potassium titanate; a conductive metal oxide such as titanium oxide; a conductive material such as polyphenylene derivative, and the like may be used.

The negative electrode slurry may further include a thickener such as sodium carboxymethyl cellulose (Na-CMC), carboxymethyl cellulose lithium (Li-CMC), and cellulose nanofiber (CNF).

The negative electrode slurry according to an exemplary embodiment of the present invention may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In an exemplary embodiment of the present invention, a weight of the solid content of the negative electrode slurry may be 20 parts by weight to 75 parts by weight, and specifically 30 parts by weight to 70 parts by weight on the basis of 100 parts by weight of the total of the negative electrode slurry.

### <Secondary Battery>

A secondary battery according to an exemplary embodiment of the present invention may include the negative electrode according to an exemplary embodiment of the present invention described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

According to an exemplary embodiment of the present invention, the density of the electrode can be increased through a pressing process during the electrode fabricating process.

A secondary battery according to an exemplary embodiment of the present invention includes a positive electrode, a negative electrode, a separator, and an electrolyte, wherein a ratio of an electrode density of the positive electrode to an electrode density of the negative electrode (electrode density of the positive electrode/electrode density of the negative electrode) is 2.06 or greater. This numerical value is a value rounded to 3 decimal places.

In another exemplary embodiment, the ratio of the electrode density of the positive electrode to the electrode density of the negative electrode (electrode density of the positive electrode/electrode density of the negative electrode) may be 2.06 or greater, or 2.06 or greater and 2.47 or less, or 2.06 or greater and 2.30 or less. According to another exemplary embodiment, the electrode density of the positive electrode is 3.5 g/cc or greater.

In another exemplary embodiment, the electrode density of the positive electrode is 3.5 g/cc to 3.73 g/cc.

According to another exemplary embodiment, the electrode density of the positive electrode is 3.5 g/cc to 3.55 g/cc.

According to another exemplary embodiment, the electrode density of the negative electrode is 1.7 g/cc or less.

In another exemplary embodiment, the electrode density of the negative electrode is 1.51 g/cc to 1.7 g/cc.

In another exemplary embodiment, the electrode density of the negative electrode is 1.51 g/cc to 1.62 g/cc.

A secondary battery according to another exemplary embodiment includes a positive electrode, a negative electrode, a separator, and an electrolyte, wherein the negative electrode includes a negative electrode active material, wherein the negative electrode active material includes a Si-based active material and a carbon-based active material, wherein the positive electrode includes a Ni-based active material, wherein the Ni-based active material includes a cobalt oxide layer on a portion of a surface of a particle, and wherein a ratio of an electrode density of the positive electrode to an electrode density of the negative electrode (electrode density of the positive electrode /electrode density of the negative electrode) is 2.06 or greater.

In another exemplary embodiment, the ratio of the electrode density of the positive electrode to the electrode density of the negative electrode (electrode density of the positive electrode/electrode density of the negative electrode) may be 2.06 or greater, or 2.06 or greater and 2.47 or less, or 2.06 or greater and 2.30 or less.

According to another exemplary embodiment, the electrode density of the positive electrode is 3.5 g/cc or greater.

In another exemplary embodiment, the electrode density of the positive electrode is 3.5 g/cc to 3.73 g/cc.

According to another exemplary embodiment, the electrode density of the positive electrode is 3.5 g/cc to 3.55 g/cc.

According to another exemplary embodiment, the electrode density of the negative electrode is 1.7 g/cc or less.

In another exemplary embodiment, the electrode density of the negative electrode is 1.51 g/cc to 1.7 g/cc.

In another exemplary embodiment, the electrode density of the negative electrode is 1.51 g/cc to 1.62 g/cc.

The electrode density may be measured by the following method. Electrode density = {electrode weight (excluding foil weight)} / {electrode thickness)*(electrode area)}

The positive electrode may include a positive electrode current collector and a positive electrode active material layer formed on at least one surface of the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 µm to 500 um, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

For the positive electrode active material, the Ni-based active material described above may be applied.

The positive electrode according to an exemplary embodiment of the present invention may include an additional positive electrode active material. The additional positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li_{1+c1}Mn_{2-c1}O₄(0≤c1≤0.33), LiMnOs, LiMn₂O₃ and LiMnO₂; a lithium copper oxide (Li₂CuO₂); a vanadium oxide such as LiVsOs, V₂O₅ and Cu₂V₂O₇; a Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.3); a lithium manganese composite oxide represented by chemical formula LiMn_{2-c3}M_{c3}O₂ (where M is at least one selected from the group consisting of Co, Ni, Fe, Cr, Zn and Ta, and satisfies 0.01≤c3≤0.1) or Li₂Mn₃MO₈ (where M is at least one selected from the group consisting of Fe, Co, Ni, Cu and Zn); LiMn₂O₄ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The positive electrode slurry according to an exemplary embodiment of the present invention may further include a solvent for positive electrode slurry formation. Specifically, the solvent for positive electrode slurry formation may include methylpyrrolidone (NMP) or the like in order to facilitate dispersion of components.

In an exemplary embodiment of the present invention, a solid weight of the positive electrode slurry may be 20 parts by weight to 85 parts by weight, and specifically 30 parts by weight to 80 parts by weight on the basis of 100 parts by weight of the total of the positive electrode slurry.

The separator serves to separate the negative electrode and the positive electrode and to provide a migration path of lithium ions, in which any separator may be used as the separator without particular limitation as long as it is typically used in a secondary battery, and particularly, a separator having a high moisture-retention ability for an electrolyte solution as well as a low resistance to the migration of electrolyte ions is preferable. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic-based liquid electrolyte, an inorganic-based liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used. In particular, among the carbonate-based organic solvents, ethylene carbonate and propylene carbonate, which are cyclic carbonates, are high-viscosity organic solvents and may be preferably used because they have high permittivity and thus dissociate a lithium salt well, and such a cyclic carbonate may be more preferably used since it may be mixed with a linear carbonate with low viscosity and low permittivity, such as dimethyl carbonate or diethyl carbonate, in an appropriate ratio and used to prepare an electrolyte with high electric conductivity.

A lithium salt may be used as the metal salt, and the lithium salt is a material that is readily soluble in the non-aqueous electrolyte solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in capacity of a battery, improving a discharge capacity of a battery, and the like, in addition to the above-described electrolyte components.

Another exemplary embodiment of the present invention provides a battery module including the secondary battery as a unit cell, and a battery pack including the same. Since the battery module and the battery pack include the secondary battery having high capacity and high life and cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### <Preparation of Cell>

### Example 1

### Preparation of Positive Electrode

A positive electrode slurry was prepared by adding a Ni-based positive electrode active material with a cobalt oxide layer on a portion of a surface of a particle, a conductive material (CNT) and a binder (PVDF) to a methylpyrrolidone (NMP) solvent at a weight ratio of 97.0:1.2:1.8 (a solid content of the positive electrode slurry was included in an amount of 70 parts by weight of the total positive electrode slurry).

The Ni-based positive electrode active material includes nickel (Ni), cobalt (Co), and manganese (Mn) at an atomic ratio of 86:8:6.

The positive electrode slurry prepared above was applied on an Al current collector, which was then dried at high temperature and roll-pressed at room temperature to prepare a positive electrode.

An electrode density of the positive electrode prepared above was 3.64 g/cc.

### Preparation of Negative Electrode

A negative electrode slurry was prepared by adding a negative electrode active material including a SiO-based active material and a carbon-based active material (artificial graphite, natural graphite, and SiO-based active material were included in amounts of 75 parts by weight, 20 parts by weight, and 5 parts by weight, respectively, based on 100 parts by weight of the total negative electrode active material), a conductive material (carbon black) ), a binder (SBR), and a thickener (CMC) to a distilled water solvent at a weight ratio of 95.6:1.0:2.3:1.1 (a solid content of the negative electrode slurry was included in an amount of 50 parts by weight of the total negative electrode slurry).

The negative electrode slurry prepared above was applied on a Cu current collector, which was then dried at high temperature and roll-pressed at room temperature to prepare a negative electrode.

An electrode density of the negative electrode prepared above was 1.62 g/cc.

### Preparation of Cell

A cell was prepared by interposing and assembling a separator between the positive electrode and the negative electrode prepared above, injecting an electrolyte solution, and then activating it.
- Composition of electrolyte solution: 1M LiPF₆, ethylene carbonate (EC)/ethylmethyl carbonate (EMC) (volume ratio 3/7), vinylene carbonate (VC)/propane sultone (PS) (included in the electrolyte by 3 parts by weight and 1.5 parts by weight, respectively)
- Activation: charging at 0.1C for 3 hrs., then aging at high temperature/room temperature, and then degassing

The electrode density of the positive electrode/the electrode density of the negative electrode of the cell prepared above was 2.25.

### Example 2

A cell was prepared in the same manner as in Example 1, except that 10 parts by weight of the SiO-based active material on the basis of the total negative electrode active material was included in the negative electrode.

### Example 3

A cell was prepared in the same manner as in Example 1, except that 5 parts by weight of a SiC-based active material on the basis of the total negative electrode active material was included in the negative electrode, instead of the SiO-based active material.

### Comparative Example 1

A cell was prepared in the same manner as in Example 1, except that the positive electrode was coated with cobalt hydroxide rather than the cobalt oxide layer.

### Comparative Example 2

A cell was prepared in the same manner as in Example 1, except that a Ni-based active material without a cobalt oxide layer was used in the positive electrode.

### Reference Example 1.

A cell was prepared in the same manner as in Example 1, except that only a carbon-based active material rather than a silicon-based active material was used in the negative electrode.

### Reference Example 2

A cell was prepared in the same manner as in Example 1, except that a Ni-based active material with a cobalt oxide layer on the entire surface was used in the positive electrode, and only a carbon-based active material rather than a silicon-based active material was used in the negative electrode.

### <Test result>

### Experimental Example 1. Resistance Performance of Cell

The prepared cells were subjected to constant current/constant voltage (CC/CV) charging (0.05C-cut) to 4.2V at 0.33C and constant current (CC) discharging at 0.33C (2.5V-cut) three times, and the third discharge capacity (initial capacity) was measured. Then, after charging as described above, an SOC of 50% was set with 0.33C discharging and pulse discharging was performed at 2.5C for 10 seconds to measure a resistance (initial resistance). The results are shown in Table 1 below.

**[Table 1]**

| | Initial resistance (Ω) | |
|---|---|---|
| | @SOC 50% | @SOC 5% |
| Example 1 | 1.43 | 4.27 |
| Example 2 | 1.41 | 4.22 |
| Example 3 | 1.43 | 4.20 |
| Comparative Example 1 | 1.44 | 2.63 |
| Comparative Example 2 | 1.61 | 2.93 |

### Experimental Example 2. Cell cycle life performance at room temperature

The cells were subjected to cycles of constant current/constant voltage (CC/CV) charging (0.05C-cut) to 4.2V at 0.33C and constant current (CC) discharging at 0.5C (2.5V-cut) at room temperature (25°C). After repeating 400 times, the capacity and resistance were measured in the same manner as in Experimental Example 1 to measure the capacity retention rate (capacity after 400 times/initial capacity x 100%) and the resistance increase rate [(resistance after 400 times/initial resistance x 100 - 100)%]. The results are shown in Table 2 below.

**[Table 2]**

| | Capacity retention rate (%) (@400 cycles) | Resistance increase rate (%) (@400 cycles) |
|---|---|---|
| Example 1 | 92 | 16 |
| Example 2 | 89 | 27 |
| Example 3 | 91 | 19 |
| Comparative Example 1 | 71 | 56 |
| Comparative Example 2 | 84 | 31 |
| Reference Example 1 | 91 | 12 |
| Reference Example 2 | 88 | 22 |

From the experimental results in Table 1, it can be seen that the cell resistance increased at the end of discharge (SOC 50) in Examples 1 to 3 in which the positive electrode was provided with the cobalt oxide layer. This means that the cell resistance increased due to the increase in resistance of the positive electrode. When the resistance of the positive electrode increases, the depth of use of the SiO-based negative electrode active material is reduced to prevent deterioration of the negative electrode, showing excellent effects in terms of life. This can be confirmed from the fact that the electrodes of Examples 1 to 3 in Table 2 showed the high capacity retention rates and the low resistance increase rates in the room temperature cycle test.

On the other hand, in Comparative Examples 1 and 2 in which cobalt hydroxide was coated instead of cobalt oxide or a cobalt oxide layer was not provided, the resistance of the positive electrode was low at the end of discharge, and the depth of use of the SiO-based negative electrode active material increased, so deterioration of the negative electrode progresses rapidly. This can be confirmed from the fact that the electrodes of Comparative Examples 1 and 2 showed the lower capacity retention rates and the higher resistance increase rates in the room temperature cycle test in Table 2, as compared with the electrodes of Examples 1 to 3.

In Reference Examples 1 and 2 corresponding to the electrodes in which only the carbon-based negative electrode active material was used as the negative electrode active material, the room temperature cycle life problems do not occur when only the carbon-based negative electrode active material is included as the negative electrode active material. This can be confirmed from the fact that Reference Examples 1 and 2 in Table 2 showed no significant difference in the capacity retention rate and the resistance increase rate. That is, the present invention is to solve the room temperature cycle life problem by applying the invention to an electrode including a silicon-based active material rather than an electrode in which only a carbon-based negative electrode active material is used.

## Claims

1. A secondary battery comprising a positive electrode, a negative electrode, a separator, and an electrolyte,
wherein the negative electrode comprises a negative electrode active material,
wherein the negative electrode active material comprises a Si-based active material and a carbon-based active material,
wherein the positive electrode comprises a Ni-based active material, and
wherein the Ni-based active material has a cobalt oxide layer provided on a portion of a surface of a particle.

2. The secondary battery of claim 1, wherein the cobalt oxide layer is provided on 1% to 99% of a surface area of the particle of the Ni-based active material.

3. The secondary battery of claim 1, wherein the cobalt oxide layer is of an island type.

4. The secondary battery of claim 3, wherein the Ni-based active material comprises two or more cobalt oxide layers on the surface of the particle.

5. The secondary battery of claim 1, wherein a thickness of the cobalt oxide layer is 5 nm to 10 nm.

6. The secondary battery of claim 1, wherein the cobalt oxide layer is included in an amount of 0.5 part by weight to 3 parts by weight on the basis of 100 parts by weight of the Ni-based active material.

7. The secondary battery of claim 1, wherein the Si-based active material is included in an amount of 1 part by weight to 10 parts by weight on the basis of 100 parts by weight of the negative electrode active material.

8. The secondary battery of any one of claims 1 to 7, wherein a ratio of an electrode density of the positive electrode to an electrode density of the negative electrode (electrode density of the positive electrode/electrode density of the negative electrode) is 2.06 or greater.

9. The secondary battery of claim 8, wherein the electrode density of the positive electrode is 3.5 g/cc or greater.

10. The secondary battery of claim 8, wherein the electrode density of the negative electrode is 1.7 g/cc or less.

11. A secondary battery comprising a positive electrode, a negative electrode, a separator, and an electrolyte, wherein a ratio of an electrode density of the positive electrode to an electrode density of the negative electrode (electrode density of the positive electrode/electrode density of the negative electrode) is 2.06 or greater.

12. The secondary battery of claim 11, wherein the electrode density of the positive electrode is 3.5 g/cc or greater.

13. The secondary battery of claim 11, wherein the electrode density of the negative electrode is 1.7 g/cc or less.
